# EUROPÄISCHE PATENTANMELDUNG

(11) **EP 4 648 073 A1**
(43) Veröffentlichungstag der Anmeldung: **12.11.2025**
(21) Anmeldenummer: 25174240.9
(22) Anmeldetag: 05.05.2025
(51) Int. Cl.: H01G 2/08, H01G 2/22, H01G 2/06, H01G 4/248, H01G 4/32, H01G 4/38, H01G 4/40, H01G 2/10, H01G 4/228

(54) **ZWISCHENKREISKONDENSATOR-MODUL UND WECHSELRICHTER**

(30) Priorität: 06.05.2024 DE 102024204228
(71) Anmelder: VOLKSWAGEN AG, 38440 Wolfsburg (DE)
(72) Erfinder: Neukirchner, Peter, 38102 Braunschweig (DE); Henkenius, Carsten, 34431 Marsberg/Udorf (DE)
(74) Vertreter: Zucker, Volker

(57) **Zusammenfassung**

Die Erfindung betrifft ein Zwischenkreiskondensator-Modul (1) für einen Wechselrichter (100), wobei das Zwischenkreiskondensator-Modul (1) mindestens zwei Wickel (2) aufweist, die in Reihe geschaltet sind und einen Mittelabgriff aufweisen, wobei die Wickel (2) mit Verbindungsblechen (5, 6) verbunden sind, wobei ein erstes Verbindungsblech (5) Anschlüsse (7) für einen positiven Kontakt (DC+) und Anschlüsse (8) für Halbleiterschalter (17) des Wechselrichters (100) aufweist und das zweite Verbindungsblech (6) Anschlüsse (9) für einen negativen Kontakt (DC-) und Anschlüsse (10) für Halbleiterschalter (17) aufweist, wobei die Wickel (2) eine erste Stirnseite (3) und eine zweite Stirnseite (4) mit jeweils einem Kontakt aufweisen, wobei das Zwischenkreiskondensator-Modul (1) mindestens ein Schirmblech (19) aufweist, das zwischen den Verbindungsblechen (5, 6) und den Mantelflächen der Wickel (2) angeordnet ist, wobei die zweiten Stirnflächen (4) der nebeneinander angeordneten Wickel (2) mit dem Schirmblech (19) verbunden sind, wobei die ersten Stirnseiten (3) mit den Verbindungsblechen (5, 6) verbunden sind, wobei das Schirmblech (19) thermisch und elektrisch mit einer Grundplatte (14) verbunden ist, sowie einen Wechselrichter (100) mit einem solchen Zwischenkreiskondensator-Modul (1).

## Beschreibung

Die Erfindung betrifft ein Zwischenkreiskondensator-Modul und einen Wechselrichter mit einem solchen Zwischenkreiskondensator-Modul.

Der Zwischenkreiskondensator im Antriebsstrang eines Elektrofahrzeugs dient zur Filterung hochfrequenter Ströme, wie sie typischerweise durch die schaltende Arbeitsweise der Halbleiterschalter vorkommen. Die Halbleiterschalter sind beispielsweise als IGBTs oder MOSFETs ausgebildet. Der Zwischenkreiskondensator liegt dabei zwischen der Traktionsbatterie und den Halbleiterschaltern, sodass die Traktionsbatterie vor diesen Belastungen geschützt ist.

Der Zwischenkreiskondensator beinhaltet im Wesentlichen einen oder mehrere Wickel, welche gegebenenfalls elektrisch parallel miteinander verbunden sind. Es ist aber auch bekannt, die Wickel in Reihe zu schalten, sodass sich ein Mittelabgriff bildet. Ein Wickel besteht aus mindestens zwei elektrisch leitfähigen, dünnen Folien, die durch eine Isolationsfolie getrennt und ineinander spiralförmig aufgewickelt sind. Elektrisch werden die Wickel jeweils über die Stirnseiten kontaktiert und über Verbindungsbleche einerseits mit der Traktionsbatterie und andererseits mit den Halbleiterschaltern verbunden. Um Kurzschlüsse zu vermeiden, sind die Verbindungsbleche elektrisch isoliert. Beispielsweise wird ein Isolationspapier zwischen den Verbindungsblechen angeordnet.

Die Strombelastung im Zwischenkreiskondensator führt zu dessen Erwärmung.

Der Erfindung liegt das technische Problem zugrunde, ein Zwischenkreiskondensator-Modul zu schaffen, das trotz einer kompakten Bauweise hinsichtlich der Wärmebelastung verbessert ist. Ein weiteres technisches Problem ist die Schaffung eines Wechselrichters mit einem solchen Zwischenkreiskondensator-Modul.

Die Lösung des technischen Problems ergibt sich durch ein Zwischenkreiskondensator-Modul mit den Merkmalen des Anspruchs 1 sowie einen Wechselrichter mit den Merkmalen des Anspruchs 8. Weitere vorteilhafte Ausgestaltungen der Erfindung ergeben sich aus den Unteransprüchen.

Das Zwischenkreiskondensator-Modul für einen Wechselrichter weist mindestens zwei Wickel auf, die in Reihe geschaltet sind und einen Mittelabgriff aufweisen. Die Wickel sind mit Verbindungsblechen verbunden. Ein erstes Verbindungsblech weist Anschlüsse für einen positiven Kontakt und Anschlüsse für Halbleiterschalter des Wechselrichters auf. Ein zweites Verbindungsblech weist Anschlüsse für einen negativen Kontakt und Anschlüsse für Halbleiterschalter auf. Die Wickel weisen eine erste Stirnseite und eine zweite Stirnseite mit jeweils einem Kontakt auf. Das Zwischenkreiskondensator-Modul weist mindestens ein Schirmblech auf, das zwischen den Verbindungsblechen und den Mantelflächen der Wickel angeordnet ist. Dabei sind die zweiten (unteren) Stirnflächen der nebeneinander angeordneten Wickel mit dem Schirmblech verbunden. Die ersten (oberen) Stirnseiten der Wickel sind mit den Verbindungsblechen verbunden. Das Schirmblech ist thermisch und elektrisch mit einer Grundplatte verbunden. Hierdurch werden Wirbelstromeffekte aufgrund der engen Stromführung der Verbindungsbleche wirksam zur Grundplatte abgeleitet, sodass die entstehende Wärmebelastung in den Wickeln reduziert wird. Dadurch wird eine Reduzierung der verfügbaren Kapazität infolge erhöhter Temperatur verhindert, sodass der Zwischenkreiskondensator in Summe kleiner dimensioniert werden kann. Die Grundplatte steht dabei vorzugsweise mit einem Kühlmittelkreislauf in thermischer Verbindung oder weist einen solchen Kühlmittelkreislauf auf. Die Wickel weisen im Querschnitt einen ovalen Verlauf auf, der beispielsweise elliptisch ist. Die ovale bzw. elliptische Bauform weist Vorteile bei der Packungsdichte gegenüber kreisrunden Querschnitten auf.

In einer Ausführungsform weist das Zwischenkreiskondensator-Modul n Wickel auf, wobei n geradzahlig ist. Dabei sind die Wickel, die mit dem ersten Verbindungsblech verbunden sind, und die Wickel, die mit dem zweiten Verbindungsblech verbunden sind, alterierend angeordnet. Hierdurch wird der Stromfluss räumlich symmetriert. Dabei kann vorgesehen sein, dass die Wickel einzeln alternierend sind. Es sind aber auch Ausführungen möglich, wo die Wickel gruppenweise alternierend angeordnet sind.

In einer Ausführungsform ist zwischen den Verbindungsblechen und/oder zwischen dem benachbarten Verbindungsblech und dem Schirmblech Isolationsmaterial angeordnet. Vorzugsweise ist das Isolationsmaterial Isolationspapier, sodass Kurzschlüsse vermieden werden. Das benachbarte Verbindungsblech ist dabei das Verbindungsblech (erste oder zweite), das dichter an dem Schirmblech angeordnet ist.

In einer weiteren Ausführungsform ist auf der Grundplatte mindestens ein Kühlkörper für die Wickel angeordnet. Vorzugsweise fließt eine Kühlflüssigkeit durch den Kühlkörper.

In einer weiteren Ausführungsform weist das Zwischenkreiskondensator-Modul ein Gehäuse auf, das mit einer Vergussmasse ausgefüllt ist, wobei das Gehäuse und die Grundplatte elektrisch isoliert sind. Hierdurch ist das Gehäuse berührsicher. Durch die Vergussmasse (z.B. Epoxidharz) wird die mechanische Stabilität gewährleistet.

In einer weiteren Ausführungsform ist zwischen der Unterseite des Gehäuses und der Grundplatte eine Deckplatte angeordnet, die primär für eine gute Anbindung an die Grundplatte dient und Unebenheiten der Vergussmasse ausgleicht. Die Deckplatte ist thermisch gut leitend.

In einer weiteren Ausführungsform sind die Anschlüsse für den positiven und negativen Kontakt und die Anschlüsse für die Halbleiterschalter der Verbindungsbleche auf gegenüberliegenden Seiten der Wickel vorgesehen, wobei die Verbindungsbleche und das Schirmblech einen im Wesentlichen U-förmigen Querschnitt aufweisen.

Dabei kann weiter vorgesehen sein, dass die Basis des U-förmigen Profils des Schirmblechs gestuft bzw. alternierend gestuft ausgebildet ist, sodass die ersten Stirnseiten der Wickel, die mit dem ersten Verbindungsblech verbunden sind, in einer anderen Ebene liegen als die ersten Stirnseiten der Wickel, die mit dem zweiten Verbindungsblech verbunden sind, sodass die ersten elektrische Isolierung der Verbindungsbleche verbessert ist, da der räumliche Abstand vergrößert ist.

Der Wechselrichter weist ein zuvor beschriebenes Zwischenkreiskondensator-Modul auf, wobei die Halbleiterschalter des Wechselrichters mit der Grundplatte verbunden sind. Hierdurch entsteht ein sehr kompakter Wechselrichter mit sehr kurzen Strompfaden. Die Anzahl der Halbleiterschalter ist dabei abhängig von der Bauart. So sind beispielsweise Bauformen mit sechs Halbleiterschaltern möglich, um eine dreiphasige Ausgangsspannung zu erzeugen (B6-Brückenschaltung). Es sind aber auch Bauformen möglich, wo mehr als sechs Halbleiterschalter zur Anwendung kommen. So können beispielsweise zwei oder mehr Halbleiterschalter jeweils parallel geschaltet werden, um so die begrenzte Stromtragfähigkeit eines Halbleiterschalters zu kompensieren. Es sind aber auch Wechselrichter für einen 3-Level-Betrieb bekannt, wo vier Halbleiterschalter je Halbbrücke in Reihe geschaltet sind.

In einer weiteren Ausführungsform sind die Halbleiterschalter auf mindestens einem Kühlkörper angeordnet, wobei der mindestens eine Kühlkörper auf der Grundplatte angeordnet ist.

In einer weiteren Ausführungsform sind die Halbleiterschalter räumlich parallel angeordnet, sodass der Stromfluss bzw. die Strompfade symmetriert sind.

Die Erfindung wird nachfolgend anhand bevorzugter Ausführungsbeispiele näher erläutert. Die Figuren zeigen:
- Fig. 1: einen Querschnitt durch einen Wechselrichter,
- Fig. 2: eine perspektivische Darstellung auf einem Wechselrichter ohne Gehäuse und Vergussmasse,
- Fig. 3: eine Explosionsdarstellung eines Zwischenkreiskondensator-Moduls ohne Grundplatte,
- Fig. 4a: eine schematische Darstellung der Wickel in einer alternativen Ausführungsform,
- Fig. 4b: eine schematische Darstellung der Wickel in einer weiteren alternativen Ausführungsform und
- Fig. 5: ein Querschnitt durch ein Zwischenkreiskondensator-Modul (Stand der Technik).

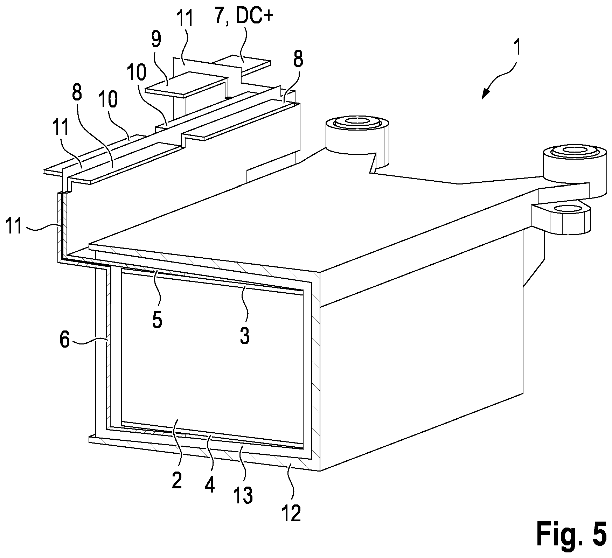

Bevor die Erfindung näher erläutert werden soll, wird zunächst anhand der Fig. 5 ein Zwischenkreiskondensator-Modul 1 gemäß dem Stand der Technik erläutert. Das Zwischenkreiskondensator-Modul 1 weist einen Zwischenkreiskondensator in Form eines oder mehrerer Wickel 2 auf. Der Wickel 2 weist eine erste Stirnseite 3 und eine zweite Stirnseite 4 auf, die jeweils Kontakte aufweisen, wobei die Mantelfläche des Wickels 2 elektrisch isoliert ist. Die erste Stirnseite 3 des Wickels 2 ist mit einem ersten Verbindungsblech 5 elektrisch verbunden. Die zweite Stirnseite 4 des Wickels 2 ist mit einem zweiten Verbindungsblech 6 elektrisch verbunden. Das erste Verbindungsblech 5 weist einen Anschluss 7 für ein positiven Kontakt DC+ und Anschlüsse 8 für Halbleiterschalter auf. Entsprechend weist das zweite Verbindungsblech 6 einen Anschluss 9 für einen negativen Kontakt DC- und Anschlüsse 10 für Halbleiterschalter auf. Zwischen dem ersten Verbindungsblech 5 und dem zweiten Verbindungsblech 6 ist Isolationsmaterial in Form von Isolationspapier 11 angeordnet. Der Wickel 2 sowie die den Wickel 2 kontaktierende Teile des ersten Verbindungsbleches 5 und des zweiten Verbindungsbleches 6 sind in einem Gehäuse 12 angeordnet und mit einer Vergussmasse 13 vergossen.

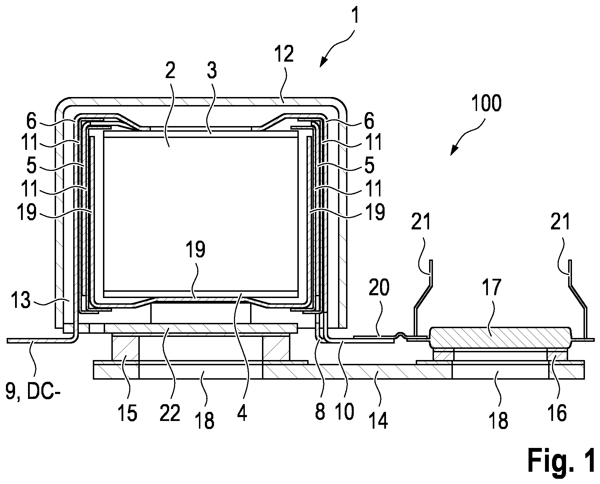

In der Fig. 1 ist ein Wechselrichter 100 mit einem Zwischenkreiskondensator-Modul 1 im Querschnitt teilweise dargestellt. Im Gegensatz zum Zwischenkreiskondensator-Modul 1 gemäß Fig. 5, das schon mit einem oder mehr Wickeln ausgeführt sein kann, weist das Zwischenkreiskondensator-Modul 1 mindestens zwei Wickel 2 auf. Der Wechselrichter 100 weist eine Grundplatte 14 auf, auf dem mindestens ein Kühlkörper 15 für die Wickel 2 und mindestens ein Kühlkörper 16 für Halbleiterschalter 17 angeordnet sind. In der Grundplatte 14 sind Zuführungen 18 für eine Flüssigkeitskühlung der Kühlkörper 15, 16 vorgesehen. Das Zwischenkreiskondensator-Modul 1 weist ein Gehäuse 12 auf, das mit einer Vergussmasse 13 vergossen ist. Das erste Verbindungsblech 5 und das zweite Verbindungsblech 6 sind zu beiden Seiten der Wickel 2 angeordnet und nahezu vollständig im Gehäuse 12 angeordnet und vergossen. Dabei ist der Anschluss 9 für den negativen Kontakt DC- nicht vergossen. Der entsprechende Anschluss 7 für den positiven Kontakt DC+ ist ebenfalls nicht vergossen und nicht sichtbar, da er sich vor der Schnittebene des Bildes befindet. Zwischen dem ersten Verbindungsblech 5 und dem zweiten Verbindungsblech 6 sind Isolationspapiere 11 angeordnet. Weiter ist ein Schirmblech 19 vorgesehen, das zwischen den Mantelflächen der Wickel 2 und dem ersten Verbindungsblech 5 angeordnet ist. Das Schirmblech 19 kontaktiert dabei alle zweiten (unteren) Stirnseiten 4 der Wickel 2, wobei das Schirmblech 19 elektrisch und thermisch mit der Grundplatte 14 verbunden ist. Die erste Stirnseite 3 des im Querschnitt erkennbaren Wickels 2 wird vom zweiten Verbindungsblech 6 kontaktiert. Zwischen dem Schirmblech 19 und dem ersten Verbindungsblech 5 (als benachbartes Verbindungsblech) ist ebenfalls Isolationspapier 11 angeordnet. Die Anschlüsse 8, 10 für die Halbleiterschalter 17 sind zur anderen Seite herausgeführt und über Kontaktteile 20 mit den Halbleiterschaltern 17 elektrisch verbunden. Weiter dargestellt sind Gate-Kontakte 21 der Halbleiterschalter 17. Schließlich weist das Zwischenkreiskondensator-Modul 1 noch eine Deckplatte 22 auf, die zwischen dem Gehäuse 12 bzw. der Vergussmasse 13 und dem Kühlkörper 15 für die Wickel 2 angeordnet ist.

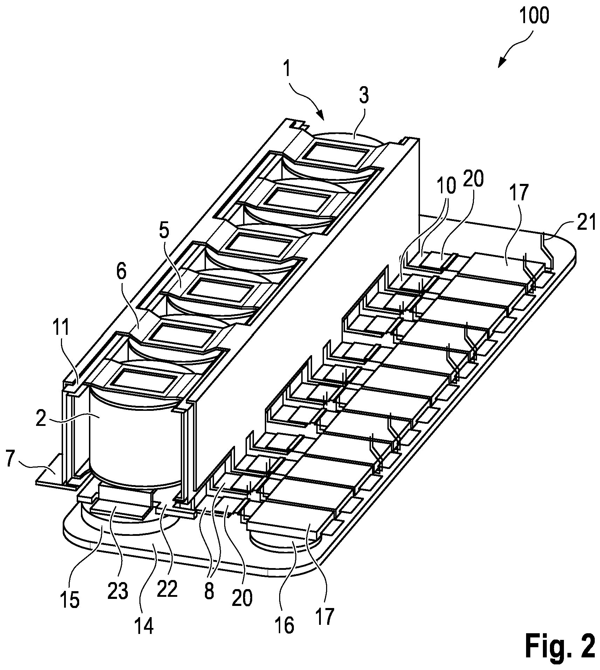

In der Fig. 2 ist ein Teil des Wechselrichters 100 perspektivisch dargestellt, wobei Gehäuse 12 und Vergussmasse 13 fehlen. Das Zwischenkreiskondensator-Modul 1 weist sechs Wickel 2 auf, deren zweite Stirnseiten 4 alle durch das Schirmblech 19 kontaktiert werden, wobei über eine Kontaktzunge 23 das Schirmblech 19 elektrisch und thermisch mit dem Kühlkörper 15 und damit mit der Grundplatte 14 verbunden ist. Die sechs Wickel 2 sind nebeneinander in Reihe angeordnet, wobei die ersten (oberen) Stirnseiten 3 der Wickel 2 alternierend mit dem ersten Verbindungsblech 5 und dem zweiten Verbindungsblech 6 elektrisch verbunden sind. Das Schirmblech 19 stellt dabei einen Mittelabgriff aller sechs Wickel dar. Weiter dargestellt sind zwölf Halbleiterschalter 17, die parallel angeordnet sind. Die Halbleiterschalter 17 sind dabei auf dem mindestens einen Kühlkörper 16 angeordnet. Da die Anzahl der Halbleiterschalter 17 doppelt so groß ist wie die Anzahl der Wickel 2, weisen das erste Verbindungsblech 5 und das zweite Verbindungsblech 6 jeweils zwei dicht benachbarte Anschlüsse 8, 10 auf, um jeweils zwei parallele Halbleiterschalter 17 zu kontaktieren, die auch elektrisch parallel geschaltet sind.

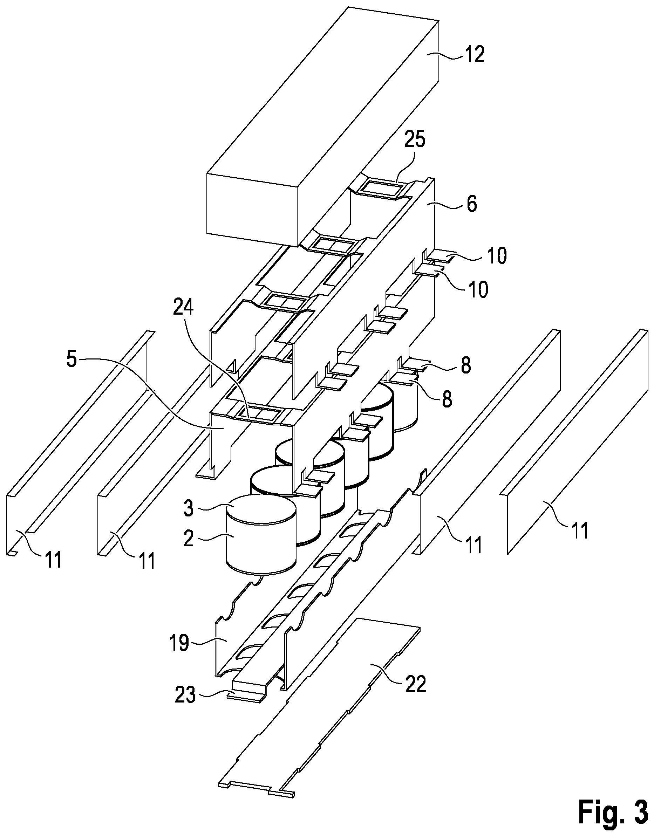

In der Fig. 3 ist das Zwischenkreiskondensator-Modul 1 in einer Explosionsdarstellung gezeigt. Dabei erkennt man, dass das erste Verbindungsblech 5, das zweite Verbindungsblech 6 und das Schirmblech 19 im Wesentlichen einen U-förmigen Querschnitt aufweisen, wobei die jeweiligen Seitenwände vorzugsweise massiv sind. Die Basis von dem ersten Verbindungsblech 5 und dem zweiten Verbindungsblech 6 sind hingegen derart strukturiert, um Kontaktbereiche 24 bzw. 25 auszubilden, um die ersten (oberen) Stirnseiten 3 der zugeordneten Wickel 2 zu kontaktieren. Dabei wird das Schirmblech 19 von unten und die beiden Verbindungsbleche 5, 6 von oben über die Wickel 2 gestülpt.

In der Fig. 2 und Fig. 3 werden die nebeneinander angeordneten Wickel 2 jeweils einzeln nacheinander alternierend mit dem ersten Verbindungsblech 5 und dem zweiten Verbindungsblech 6 kontaktiert.

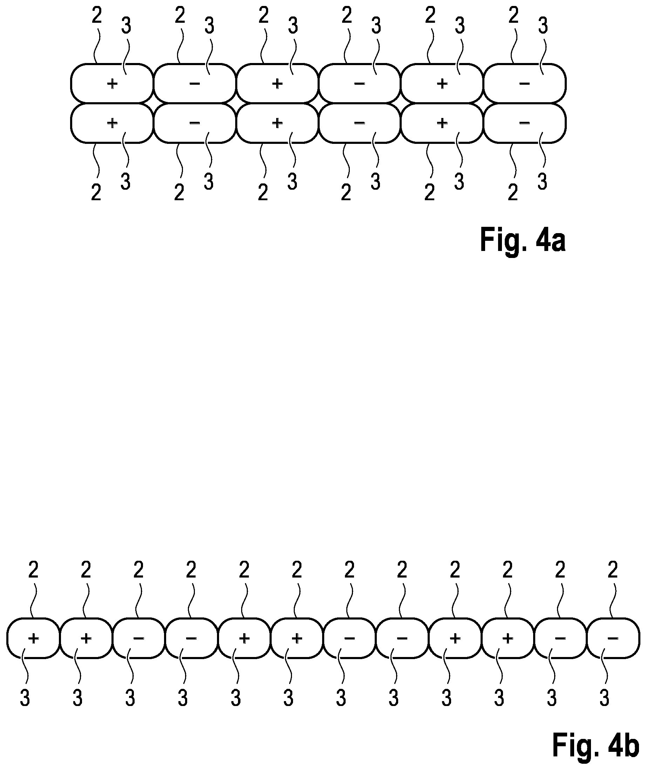

In der Fig. 4a ist schematisch eine alternative Ausführungsform dargestellt, wo z.B. zwölf Wickel 2 vorgesehen sind. Dabei sind die Wickel 2 nebeneinander in zwei Reihen angeordnet, wobei die jeweils zwei parallelen Wickel 2 unterschiedlicher Reihen mit dem gleichen Verbindungsblech 5, 6 verbunden sind, wobei die mit + gekennzeichneten Wickel 2 mit dem ersten Verbindungsblech 5 und die mit - gekennzeichneten Wickel 2 mit dem zweiten Verbindungsblech 6 kontaktiert werden. Im Querschnitt sind die Wickel 2 oval, sodass die Packungsdichte erhöht wird.

In der Fig. 4b ist eine weitere alternative Ausführungsform dargestellt, wobei wieder alle Wickel 2 in einer Reihe angeordnet sind. Dabei alterniert die Kontaktierung paarweise.

Insgesamt lassen sich die Vorteile des Zwischenkreiskondensator-Moduls 1 bzw. des Wechselrichters 100 wie folgt zusammenfassen.

Die parallele Anordnung der Halbleiterschalter 17 bietet gegenüber einer seriellen Anordnung eine besonders enge Gestaltung der Kommutierungsmasche und damit eine Reduktion der elektromagnetischen Störemissionen. Zudem ist die Länge der Stromführung durch die Halbleiterschalter 17 auf ein Minimum verkürzt, sodass Stromverdrängungseffekte innerhalb der Kühlkörper weniger Verlustwärme erzeugen.

Durch die wechselweise gedrehte Anordnung der Wickel 2 innerhalb des Zwischenkreiskondensator-Moduls 1 kann der Mittelabgriff mit dem Kühlkörper verbunden werden. Mit der Isolation der Grundplatte 14 bzw. dem Kühlkörper 15 gegenüber dem Gehäuse 12, welches als eine schutzgeerdete Hülle des gesamten Aufbaus wirkt, werden kapazitive Ableitströme, welche durch enge Anbindung der Halbleiterschalter an den Kühlkörper entstehen, direkt zum Zwischenkreiskondensator zurückgeführt, was im Stand der Technik Y-Kondensatoren tun. Diese können daher entfallen oder können kleiner dimensioniert werden.

Ähnlich wie bei den Halbleiterschaltern treten durch enge Stromführung der Verbindungsbleche an die Wickel Wickelstromeffekte auf, die durch das Schirmblech reduziert werden.

### Bezugszeichenliste

- 1: Zwischenkreiskondensator-Modul
- 2: Wickel
- 3: erste Stirnseite
- 4: zweite Stirnseite
- 5: erstes Verbindungsblech
- 6: zweites Verbindungsblech
- 7, 8, 9, 10: Anschlüsse
- 11: Isolationspapier
- 12: Gehäuse
- 13: Vergussmasse
- 14: Grundplatte
- 15, 16: Kühlkörper
- 17: Halbleiterschalter
- 18: Zuführung
- 19: Schirmblech
- 20: Kontaktteil
- 21: Gate-Kontakt
- 22: Deckplatte
- 23: Kontaktzunge
- 24, 25: Kontaktbereiche
- 100: Wechselrichter

## Patentansprüche

1. Zwischenkreiskondensator-Modul (1) für einen Wechselrichter (100), wobei das Zwischenkreiskondensator-Modul (1) mindestens zwei Wickel (2) aufweist, die in Reihe geschaltet sind und einen Mittelabgriff aufweisen, wobei die Wickel (2) mit Verbindungsblechen (5, 6) verbunden sind, wobei ein erstes Verbindungsblech (5) Anschlüsse (7) für einen positiven Kontakt (DC+) und Anschlüsse (8) für Halbleiterschalter (17) des Wechselrichters (100) aufweist und das zweite Verbindungsblech (6) Anschlüsse (9) für einen negativen Kontakt (DC-) und Anschlüsse (10) für Halbleiterschalter (17) aufweist, wobei die Wickel (2) eine erste Stirnseite (3) und eine zweite Stirnseite (4) mit jeweils einem Kontakt aufweisen,
**dadurch gekennzeichnet, dass**
das Zwischenkreiskondensator-Modul (1) mindestens ein Schirmblech (19) aufweist, das zwischen den Verbindungsblechen (5, 6) und den Mantelflächen der Wickel (2) angeordnet ist, wobei die zweiten Stirnflächen (4) der nebeneinander angeordneten Wickel (2) mit dem Schirmblech (19) verbunden sind, wobei die ersten Stirnseiten (3) mit den Verbindungsblechen (5, 6) verbunden sind, wobei das Schirmblech (19) thermisch und elektrisch mit einer Grundplatte (14) verbunden ist.

2. Zwischenkreiskondensator-Modul nach Anspruch 1, **dadurch gekennzeichnet, dass** das Zwischenkreiskondensator-Modul (1) n Wickel (2) aufweist, wobei n geradzahlig ist, wobei die Wickel (2), die mit dem ersten Verbindungsblech (5) verbunden sind, und die Wickel (2), die mit dem zweiten Verbindungsblech (6) verbunden sind, alternierend angeordnet sind.

3. Zwischenkreiskondensator-Modul nach Anspruch 1 oder 2, **dadurch gekennzeichnet, dass** zwischen den Verbindungsblechen (5, 6) und/oder zwischen dem benachbarten Verbindungsblech (5) und dem Schirmblech (19) Isolationsmaterial angeordnet ist.

4. Zwischenkreiskondensator-Modul nach einem der vorangegangenen Ansprüche, **dadurch gekennzeichnet, dass** auf die Grundplatte (14) mindestens ein Kühlkörper (15) für die Wickel (2) angeordnet ist.

5. Zwischenkreiskondensator-Modul nach einem der vorangegangenen Ansprüche, **dadurch gekennzeichnet, dass** das Zwischenkreiskondensator-Modul (1) ein Gehäuse (12) aufweist, das mit einer Vergussmasse (13) ausgefüllt ist, wobei das Gehäuse (12) und die Grundplatte (14) elektrisch isoliert sind.

6. Zwischenkreiskondensator-Modul nach einem der vorangegangenen Ansprüche, **dadurch gekennzeichnet, dass** zwischen einer Unterseite des Gehäuses (12) und der Grundplatte (14) eine Deckplatte (22) angeordnet ist.

7. Zwischenkreiskondensator-Modul nach einem der vorangegangenen Ansprüche, **dadurch gekennzeichnet, dass** die Anschlüsse (7, 9) für positive und negative Kontakte und die Anschlüsse (8, 10) für die Halbleiterschalter (17) der Verbindungsbleche (5, 6) auf gegenüberliegenden Seiten der Wickel (2) vorgesehen sind, wobei die Verbindungsbleche (5, 6) und das Schirmblech (19) einen im Wesentlichen U-förmigen Querschnitt aufweisen.

8. Wechselrichter (100), **dadurch gekennzeichnet, dass** der Wechselrichter (100) ein Zwischenkreiskondensator-Modul (1) nach einem der vorangegangenen Ansprüche 1 bis 7 enthält, wobei die Halbleiterschalter (17) des Wechselrichters (100) mit der Grundplatte (14) verbunden sind.

9. Wechselrichter nach Anspruch 8, **dadurch gekennzeichnet, dass** die Halbleiterschalter (17) auf mindestens einem Kühlkörper (16) angeordnet sind, wobei der mindestens eine Kühlkörper (16) auf der Grundplatte (14) angeordnet ist.

10. Wechselrichter nach Anspruch 8 oder 9, **dadurch gekennzeichnet, dass** die Halbleiterschalter (17) räumlich parallel angeordnet sind.
